# EUROPÄISCHE PATENTSCHRIFT

(11) **EP 3 210 793 B1**
(45) Veröffentlichungstag und Bekanntmachung des Hinweises auf die Patenterteilung: **18.04.2018**
(21) Anmeldenummer: 16401014.2
(22) Anmeldetag: 26.02.2016
(51) Int. Cl.: B41M 5/382, C23C 14/04

(54) **VERFAHREN ZUM ÜBERTRAGEN EINER DRUCKSUBSTANZ AUF EIN SUBSTRAT MITTELS EINER LASERSTRAHLUNG**
METHOD FOR TRANSFERRING A PRINTING SUBSTANCE TO A SUBSTRATE BY MEANS OF A LASER BEAM
PROCEDE DE TRANSFERT D'UNE SUBSTANCE D'IMPRESSION SUR UN SUBSTRAT A L'AIDE D'UN RAYONNEMENT LASER

(43) Veröffentlichungstag der Anmeldung: 30.08.2017
(73) Patentinhaber: LPKF Laser & Electronics AG, 30827 Garbsen (DE)
(72) Erfinder: Bünting, Udo, 31555 Suthfeld (DE); Podobnik, Bostjan, 1000 Ljubljana (SI); Petkovsek, Rok, 1000 Ljubljana (SI); Ostholt, Roman, 30855 Langenhagen (DE)
(74) Vertreter: Scheffler, Jörg

(56) Entgegenhaltungen:
- US-A1- 2003 071 020
- US-A1- 2011 097 550

## Beschreibung

Die Erfindung betrifft ein Verfahren zum übertragen einer auf einem Träger insbesondere als eine Beschichtung bereit gestellten Drucksubstanz auf ein Substrat mittels einer Laserstrahlung einer einen Verstärker aufweisenden Laserstrahlquelle, bei denen die Laserstrahlung und der Träger relativ zueinander bewegt werden und dabei die Ausgangsleistung der Laserstrahlquelle zeitlich so moduliert wird, dass ausschließlich in einer aktiven Phase der Laserstrahlquelle Drucksubstanz mittels der Laserstrahlung und in einer passiven Phase der Laserstrahlquelle keine Drucksubstanz übertragen wird.

Druckverfahren der genannten Art finden Anwendung beispielsweise im digitalen Druck von Farben oder Pasten. Beim sogenannten Laser-Transferdruckverfahren wird die Laserstrahlung einer Laseranordnung durch einen transparenten Träger eines Druckmediums, beispielsweise eine in einer Kapsel enthaltene Paste oder eine Tinte, gerichtet. Durch den Energieeintrag wird der Inhalt der Kapsel auf ein Substrat übertragen.

Hierzu wird die Laserstrahlung über den Träger mittels einer optischen Einrichtung bewegt. Zugleich wird die Ausgangsleistung der Laserstrahlquelle zeitlich so moduliert, dass lediglich in einer aktiven Phase Drucksubstanz übertragen wird und in einer passiven Phase keine Drucksubstanz übertragen wird.

Das Grundprinzip eines solchen Verfahrens ist aus der WO 2002/092674 A1 bekannt. Dabei steht einem für die Laserstrahlung transparenten Träger, der beschichtet ist, ein Substrat gegenüber. Wird die Schicht durch den Träger mit Laserstrahlung bestrahlt, so wird ein Teil des Materials der Schicht verdampft. Dies löst einen Übertrag des nicht verdampften Anteils auf das Substrat aus.

Aus der DE 197 46 174 C1 ist ein Verfahren bekannt, in dem die Drucksubstanz auf eine zylindrische, transparente Druckform aufgetragen wird, die eine Vielzahl von Näpfchen aufweist. Die Drucksubstanz wird aus den Näpfchen auf einen Bedruckstoff übertragen, indem mittels einer energieabgebenden Einrichtung, beispielsweise einer Laserstrahlquelle, eine Volumen- oder Positionsänderung hervorgerufen wird.

Aus der GB 2 173 452 A sind eine Vorrichtung und ein Verfahren für den Laserdruck bekannt. Verwendet wird dabei ein Druckträger, beispielsweise aus Papier, dessen Oberfläche mit Mikrokapseln beschichtet ist, die Druckfarbe enthalten. Auf eine solche Mikrokapsel auftreffende Laserstrahlung bringt diese Kapsel zum Zerplatzen. Das Druckbild entsteht beispielsweise durch zeilenförmiges Abrastern, indem die entsprechenden Bildpunkte durch Aktivierung mittels der Laserstrahlung erzeugt werden. Bei manchen Bildpunkten ist der Laser aktiv, bei anderen wird die Emission unterbrochen, je nachdem ob an dem jeweiligen Bildpunkt Druckfarbe übertragen werden soll oder nicht.

Als demgegenüber hinderlich erweist sich ein auch als Spiking bezeichneter, unerwünschter Effekt, der während der Einschwingphase eines Lasers auftritt. Nachdem die Emission eines Lasers für die Dauer von nur wenigen Millisekunden unterbrochen wurde, weist der erste Puls eine stark schwankende Intensität auf, meist charakterisiert durch eine deutliche Spitze zu Beginn, einem sogenannten Spike. Im Druckvorgang führt dies zu stark unterschiedlichen Ergebnissen, je nachdem ob die Emission des Lasers unterbrochen wird oder nicht.

Aus der DE 198 29 684 B4 ist eine Laseranordnung bekannt, bei der die Strahlung von zwei intensitätssteuerbaren Laserdioden in einen Faserlaser eingekoppelt wird, der von einer separaten Pumpquelle gepumpt wird. Zur Modulation werden die Laserdioden gegenphasig, also abwechselnd angesteuert, so dass die Summe der Leistungen der Laserdioden konstant ist. Die Modulation erfolgt über die Steuerung der einen Laserdiode, während die andere Laserdiode dazu dient, die gesamte Leistung im Faserlaser konstant zu halten. In der aktiven Phase der Laseranordnung, in der die genutzte Strahlung emittiert wird, ist die erste Laserdiode aktiv, in der passiven Phase, in der die Ausgangsstrahlung beispielsweise in eine Strahlfalle gelenkt wird und die Laserstrahlquelle effektiv ausgeschaltet ist, ist die zweite Laserdiode aktiv. Indem der Faserverstärker stets mit einer konstanten Leistung beaufschlagt und damit in Sättigung gehalten wird, wird die unerwünschte Spontanemission des Faserverstärkers vollständig unterdrückt und ein hoher Kontrast erhalten.

Eine Verbesserung der beschriebenen Laseranordnung ist unter Anderem in der US 2011/0085149 zu finden. Darin wird beschrieben, dass bei hohen Leistungsdichten der Laserstrahlung mit sehr geringer Bandbreite, wie sie von Laserdioden emittiert wird, innerhalb eines Faserverstarkers Brillouin-Streuung auftritt, die zu einer Zerstörung der optischen Elemente führen kann. Dies kann beispielsweise dadurch vermieden werden, dass dem Steuersignal der Laserdioden periodische Unterbrechungen aufgeprägt werden, die zu einer deutlich breitbandigeren Emission führen.

Die US 2003/071020 A1 betrifft ein Verfahren und eine Vorrichtung zur Lasermarkierung, bei dem auf der Oberfläche zumindest ein Teil des Targetmaterials abgetragen wird. Weiterhin wird das Material einer Bestrahlung mit einer Energiefluenz unterhalb der Ablationsschwelle des Materials ausgesetzt und so eine Wechselwirkung zwischen dem abgetragenen Material und der Oberfläche induziert. Hierzu umfasst die Vorrichtung einen Galvanometer-Scanner und ferner einen Energiezähler, um die Energie der Bestrahlung zu messen und die Messwerte an die Steuereinheit übergeben.

Bei der Nutzung der Laserstrahlung zur Übertragung der Drucksubstanz von dem Träger auf das Substrat ist es notwendig, diesen Prozess zuerst anzustoßen und anschließend eine konstante Ausgangsleistung der Laserstrahlquelle zu gewährleisten, um den Übertragungsprozess aufrechtzuerhalten. In Laborversuchen hat sich überraschenderweise gezeigt, dass dafür eine konstante Ausgangsleistung der Laserstrahlquelle nicht optimal geeignet ist.

Dies liegt daran, dass eine stets konstante Ausgangsleistung entweder zu gering ist, um den Prozess anzustoßen. Dies führt dazu, dass der Übertragungsprozess nicht unmittelbar am Anfang der aktiven Phase der Strahlquelle einsetzt, was die räumliche Auflösung des Übertragungsprozesses verschlechtert. Oder die konstante Ausgangsleistung ist ausreichend groß, um den Übertragungsprozess unmittelbar zu Beginn der aktiven Phase auszulösen. Nachdem der Druckprozess ausgelöst wurde, ist die Leistung allerdings zu groß, was zu einem inhomogenen Übertrag der Drucksubstanz führt.

Vor diesem Hintergrund liegt der Erfindung die Aufgabe zugrunde, einen Übertrag von Drucksubstanz zu erzielen, der sowohl zeitlich konstant ist als auch eine große räumliche Auflösung ermöglicht.

Die Aufgabe wird erfindungsgemäß mit einem Verfahren gemäß den Merkmalen des Anspruches 1 gelöst. Die weitere Ausgestaltung der Erfindung ist den Unteransprüchen zu entnehmen.

Erfindungsgemäß ist ein Verfahren vorgesehen, bei dem zu Beginn der aktiven Phase während eines ersten Zeitraumes der Übertragung der Drucksubstanz durch eine kurzzeitige Überhöhung der Ausgangsleistung über eine obere Leistungsschwelle der Laserstrahlung der Übertragungsprozess ausgelöst wird, und in einem sich an den ersten Zeitraum anschließenden zweiten Zeitraum der aktiven Phase nach der kurzzeitigen Überhöhung die Ausgangsleistung insbesondere konstant, abgesehen von kurzzeitigen Unterbrechungen zur Unterdrückung der Brillouin-Streuung, im Bereich zwischen der oberen und einer unteren Leistungsschwelle eingestellt wird, wobei entweder die Leistung eines ersten Seedlaser oder eines zweiten Seedlasers in einen Verstärker der Laserstrahlquelle eingekoppelt wird und in der passiven Phase lediglich die Leistung eines der beiden Seedlaser und in der aktiven Phase ausschließlich die Leistung des anderen Seedlasers in den Verstärker eingekoppelt wird und die Überhöhung der Ausgangsleistung während des ersten Zeitraumes durch eine vorhergehende Dunkelphase erzeugt und eingestellt wird, in welcher weder eine Ausgangsleistung des ersten Seedlasers noch des zweiten Seedlasers in den Verstärker eingekoppelt und durch die Dauer der Dunkelphase die Überhöhung der Ausgangsleistung in der aktiven Phase eingestellt wird.

Die Drucksubstanz wird erfindungsgemäß von dem Träger auf das Substrat mittels der Laserstrahlung einer Laserstrahlquelle übertragen, indem durch eine kurzzeitige Überhöhung der Ausgangsleistung der Laserstrahlung, die durch eine Inversionsüberhöhung im Verstärker der Laserstrahlquelle entsteht, der Übertragungsprozess ausgelöst wird. Direkt nach dieser kurzzeitigen Überhöhung wird die Ausgangsleistung für die Dauer der aktiven Phase konstant auf einem Niveau gehalten, welches kleiner als die kurzzeitige Überhöhung ist.

Dieser gewünschte zeitliche Verlauf der Ausgangsleistung der Strahlquelle wird ermöglicht, wenn der Verstärker der Strahlquelle mit der Leistung von zwei Seedlasern beaufschlagt wird, die im Wesentlichen gegenphasig zueinander emittieren. Die verstärkte Strahlung des ersten Seedlasers wird als Nutzstrahlung für den Übertragungsprozess verwendet, die verstärkte Strahlung des zweiten Seedlasers wird beispielsweise in eine Strahlfalle gelenkt. Sie dient lediglich dazu, in einer passiven Phase der Strahlquelle die Inversion im Verstärker konstant in Sättigung zu halten. Die zeitliche Überhöhung der Ausgangsleistung der Strahlquelle, die zur Initialisierung des Übertragungsprozesses notwendig ist, wird durch die Inversionsüberhöhung im Verstärker erzielt, die nach einer Dunkelphase auftritt. Dafür werden beide Seedlaser der Strahlquelle vor Beginn einer aktiven Phase kurzzeitig ausgeschaltet. Sobald der erste Seedlaser zu Beginn der aktiven Phase wieder eingeschaltet wird, wird die überhöhte Inversion im Verstärker abgebaut und dabei kurzzeitig eine deutlich höhere Ausgangsleistung emittiert- Erfindungsgemäß wird so die kurzzeitige Überhöhung, also die Amplitude der Ausgangsleistung über der oberen Leistungsschwelle durch die Dauer der Dunkelphase eingestellt.

Im Anschluss an die kurzzeitige Überhöhung wird der Verstärker weiterhin mit der konstanten Ausgangsleistung des ersten Seedlasers beaufschlagt, wodurch die Inversion im Verstärker wieder einen zeitlich konstanten Wert annimmt. Damit ist auch die Ausgangsleistung der Laserstrahlquelle zeitlich konstant, aber auf einem niedrigeren Niveau als während der kurzzeitigen Überhöhung.

Das beschriebene Problem der Brillouin-Streuung kann trotzdem durch periodische Unterbrechungen in der Ansteuerung der Laserdioden unterdrückt werden, da die Unterbrechungen so kurz gewählt werden können, dass sie aufgrund der Trägheit des Übertragungsprozesses keinerlei Auswirkung auf diesen haben.

Die optische Einrichtung, mit der der Laserstrahl über den Träger bewegt wird, kann beispielsweise ein Galvanometer-Scanner, ein Polygon-Scanner, ein elektro-optischer Deflektor oder ein akusto-optischer Deflektor sein.

Die optische Einrichtung lenkt die Laserstrahlung im Wesentlichen entlang einer Linie ab. Dadurch ist die Wechselwirkungszone, in der die Laserstrahlung mit dem Material des Trägers oder der Drucksubstanz wechselwirkt, streifenförmig ausgeprägt. Die Länge der streifenförmigen Zone ist dabei deutlich größer als ihre Breite.

Der Laserstrahl wird bevorzugt mit einer Bahngeschwindigkeit von mehr als 10 m/s über den Träger bewegt.

Der Träger und die streifenförmige Wechselwirkungszone werden relativ zueinander bewegt, damit mit dem Übertragungsprozess zweidimensionale Muster aus Bereichen, in denen Drucksubstanz übertragen wurde, und Bereichen, in denen keine Drucksubstanz übertragen wurde, erzeugt werden können.

Vorzugsweise erfolgt die Bewegung des Trägers orthogonal zur großen Ausdehnung der streifenförmigen Wechsefwirkungszone.

Der Träger ist während des Übertragungsprozesses mit der Drucksubstanz beschichtet. Um eine kontinuierliche Übertragung zu ermöglichen, muss daher die Drucksubstanz auf dem Träger erneuert werden. Dafür kommt beispielsweise ein Beschichtungswerk zum Einsatz, an welchem der Träger kontinuierlich vorbeiläuft. Um eine hohe räumliche Auflösung des Übertragungsprozesses bei einer hohen Produktivität zu erzielen, ist es vorteilhaft, wenn die kürzeste Dauer der aktiven Phase 10 ns nicht übersteigt, bevorzugt ca. 1 ns beträgt.

Entsprechend ist es vorteilhaft, wenn die kurzzeitige Überhöhung der Ausgangsleistung eine Dauer von deutlich weniger als 1 ns hat. Um eine Übertragung der Drucksubstanz zu ermöglichen, ist der Träger vorzugsweise zumindest teilweise transparent für die Wellenlänge der Laserstrahlung. Das ermöglicht eine optimale Wechselwirkung zwischen Laserstrahlung und Drucksubstanz. Durch den Energieeintrag in die Drucksubstanz wird dann der Übertragungsprozess ausgelöst.

Eine weitere erfindungsgemäße Ausgestaltung stellt die Verwendung einer die Laserwellenlänge stark absorbierenden Schicht dar, die auf den Träger aufgetragen wird. Die Drucksubstanz wird dann auf diese Schicht aufgetragen. Durch Einwirkung der Laserstrahlung auf die absorbierende Schicht wird diese erhitzt. Die Wärmeleitung in die Drucksubstanz löst dann den Übertragungsprozess aus.

Der Übertragungsprozess ist generell mit nahezu allen Materialien möglich. Erfindungsgemäß kommen aber bevorzugt flüssige Drucksubstanzen mit einer Viskosität von weniger als 106 Pa·s zum Einsatz.

Die Laserstrahlung wird mittels einer optischen Einrichtung über den Träger bewegt. Um den Übertragungsprozess mit geringer Verzögerung zu Beginn einer aktiven Phase auszulösen, emittiert die Laserstrahlungsquelle zu Beginn einer aktiven Phase kurzzeitig eine größere Ausgangsleistung. Im Anschluss daran emittiert die Strahlungsquelle eine konstante, niedrigere Leistung für die Dauer der aktiven Phase.

Die Erfindung lässt verschiedene Ausführungsformen zu. Zur weiteren Verdeutlichung ihres Grundprinzips sind einige davon in der Zeichnung dargestellt und werden nachfolgend beschrieben. Diese zeigt in
- Fig. 1: eine Prinzipskizze einer Vorrichtung zum Übertrag von Drucksubstanz von einem Träger auf ein Substrat;
- Fig. 2: eine Variante der in Figur 1 gezeigten Vorrichtung mit einem endlos umlaufenden Träger;
- Fig. 3: einen schematischen Verlauf der jeweiligen Ausgangsleistung von zwei Seedlasern der in den Figuren 1 und 2 gezeigten Vorrichtung;
- Fig. 4: einen schematischen Verlauf einer resultierende Gesamtausgangsleistung der Vorrichtung aus dem in Figur 3 gezeigten Verlauf.

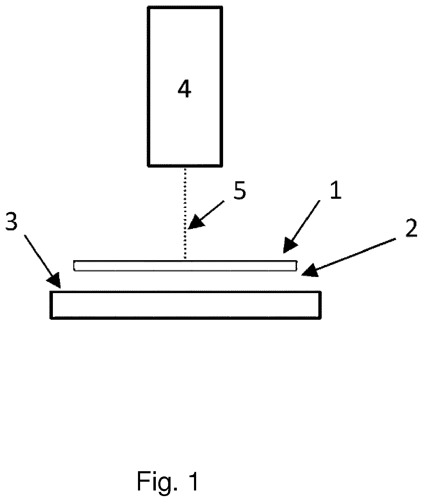

Figur 1 zeigt eine einfache Ausführung der Vorrichtung zur Ausführung des erfindungsgemäßen Übertragungsprozesses. Ein stationärer oder ortsfester Träger 1 weist eine Beschichtung mit einer Drucksubstanz 2 auf. Zur Übertragung der Drucksubstanz 2 auf ein Substrat 3 lenkt eine optische Einrichtung 4 eine Laserstrahlung 5 einer nicht dargestellten Laserstrahlquelle auf den Träger 1 mit der Drucksubstanz 2. Infolge des thermischen Energieeintrages wird diese selektiv bzw. ortsaufgelöst, beispielsweise punkt-oder linienförmig von dem Träger 1 auf das Substrat 3 übertragen. Ergänzend zu der Ablenkung der Laserstrahlung 5 kann zusätzlich auch der Träger 1 und/oder das Substrat 3 insbesondere translatorisch beweglich ausgeführt sein, um so den verfügbaren Arbeitsraum zu erweitern.

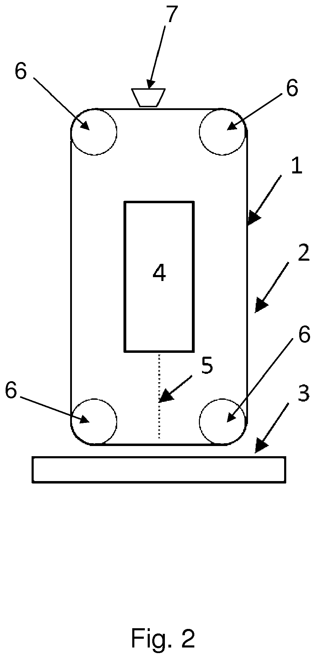

Figur 2 zeigt eine weitere Ausführungsform der Vorrichtung. Dabei ist der Träger 1 als ein endlos umlaufendes Band ausgeführt und wird insbesondere kontinuierlich über vier Umlenkrollen 6 geführt. Der Träger 1 ist an seiner dem Substrat 3 zugewandten Seite vollflächig mit der Drucksubstanz 2 beschichtet. Um eine kontinuierliche Übertragung zu ermöglichen und insbesondere einen unerwünschten Stillstand im Betrieb der Vorrichtung zu vermeiden, wird die Drucksubstanz 2 auf dem Träger 1 zyklisch oder kontinuierlich erneuert. Hierzu dient ein Beschichtungswerk 7, an welchem der Träger 1 kontinuierlich vorbeigeführt wird.

Der Übertrag auf das Substrat 3 wird wiederum durch den thermischen Energieeintrag der Laserstrahlung 5 ausgelöst, die durch die optische Einrichtung 4 auf die der Beschichtung abgewandte Seite des Trägers 1 gelenkt und so die Drucksubstanz 2 auf das Substrat 3 übertragen wird.

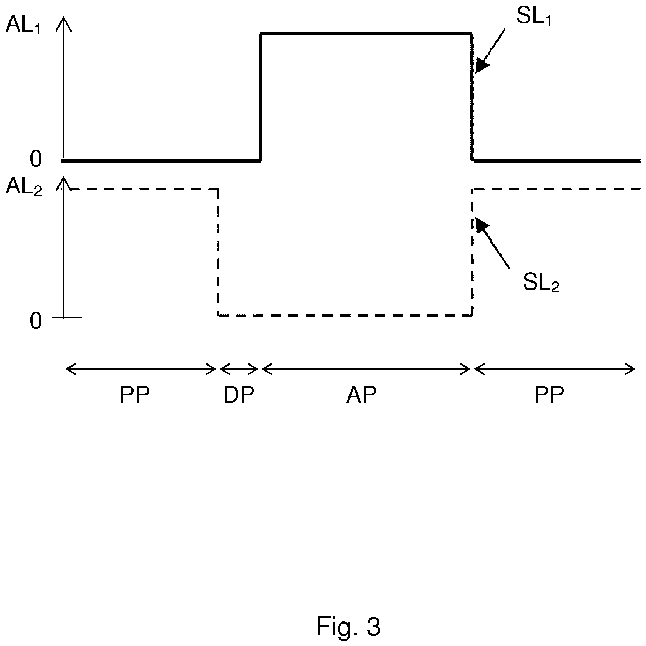

Figur 3 zeigt schematisch den Verlauf der jeweiligen Ausgangsleistung von zwei in einer aktiven Phase AP und einer passiven Phase PP wechselweise aktiven Seedlasern SL₁, SL₂, welche gemeinsam die nicht weiter dargestellten Laserstrahlungsquelle bilden. Durch den im Wesentlichen gegenphasigen Betrieb der beiden Seedlaser SL₁, SL₂ mit einer zumindest im Wesentlichen übereinstimmenden Ausgangsleistung AL₁ bzw. AL₂ wird die Inversion in einem Verstärker der Laserstrahlungsquelle konstant in Sättigung gehalten.

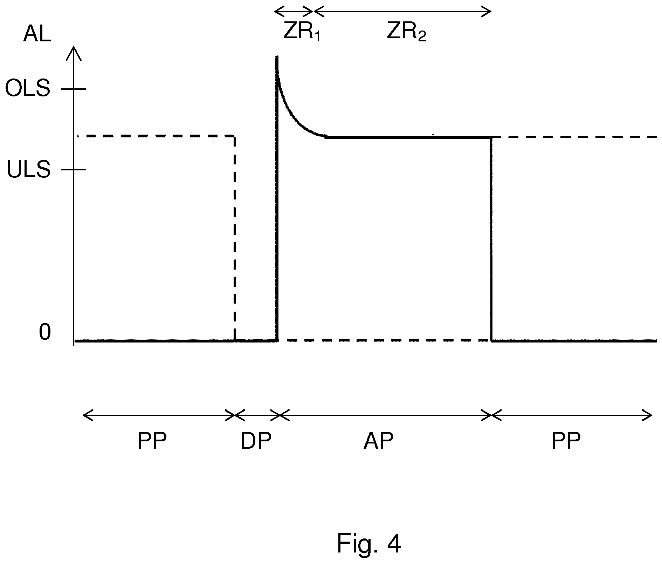

Vor Beginn der aktiven Phase AP werden beide Seedlaser SL₁ und SL₂ kurzzeitig ausgeschaltet, was zu einer Dunkelphase DP führt, in welcher der Verstärker mit keiner Laserstrahlung beaufschlagt wird. Zu Beginn der aktiven Phase AP wird der erste Seedlaser SL₁ eingeschaltet. Die resultierende Gesamtausgangsleistung AL des Verstärkers der Laserstrahlungsquelle, die wie in den Figuren 1 und 2 gezeigt als Laserstrahlung 5 auf den Träger 1 mit der Drucksubstanz 2 gelenkt wird, ist in Figur 4 dargestellt.

Die vorausgegangene Dunkelphase DP führt zu Beginn der aktiven Phase AP während eines ersten Zeitraumes ZR₁ zu einer Überhöhung der Gesamtausgangsleistung AL des Verstärkers über eine obere Leistungsschwelle OLS und damit zu einer Übertragung der Drucksubstanz 2 bereits zu Beginn der aktiven Phase AP im Gegensatz zu der beim Stand der Technik unvermeidlichen Verzögerung bei der Übertragung.

In dem sich an den ersten Zeitraum ZR₁ anschließenden zweiten Zeitraum ZR₂ der aktiven Phase AP nach der kurzzeitigen Überhöhung der Gesamtausgangsleistung AL bleibt diese weitgehend konstant im Bereich zwischen der oberen Leistungsschwelle OLS und einer unteren Leistungsschwelle ULS. Erfindungsgemäß wird die Überhöhung der Leistung durch die Dauer der Dunkelphase DP eingestellt.

**BEZUGSZEICHENLISTE**

| | | | |
|---|---|---|---|
| 1 | Träger | AP | Aktive Phase |
| 2 | Drucksubstanz | PP | passive Phase |
| 3 | Substrat | DP | Dunkelphase |
| 4 | Einrichtung | ZR₁ | erster Zeitraum |
| 5 | Laserstrahlung | ZR₂ | zweiter Zeitraum |
| | | SL₁ | Seedlaser |
| 6 | Umlenkrolle | SL₂ | Seedlaser |
| 7 | Beschichtungswerk | | |
| | | | |
| | | AL | Gesamtausgangsleistung |
| | | AL₁ | Ausgangsleistung |
| | | AL₂ | Ausgangsleistung |
| | | OLS | obere Leistungsschwelle |
| | | ULS | untere Leistungsschwelle |

## Patentansprüche

1. Verfahren zum Übertragen einer auf einem Träger (1) insbesondere als eine Beschichtung bereitgestellten Drucksubstanz (2) auf ein Substrat (3) mittels einer Laserstrahlung (5) einer einen Verstärker aufweisenden Laserstrahlquelle mit einer Ausgangsleistung (AL), bei dem die Laserstrahlung (5) und der Träger (1) relativ zueinander bewegt werden und dabei die Ausgangsleistung (AL) der Laserstrahlquelle zeitlich moduliert wird, sodass ausschließlich in einer aktiven Phase (AP) die Drucksubstanz (2) übertragen wird und in einer passiven Phase (PP) keine Drucksubstanz (2) übertragen wird, **dadurch gekennzeichnet, dass** zu Beginn der aktiven Phase (AP) während eines ersten Zeitraumes (ZR₁) die Übertragung der Drucksubstanz (2) durch eine kurzzeitige Überhöhung der Ausgangsleistung (AL) über eine obere Leistungsschwelle (OLS) der Laserstrahlung der Übertragungsprozess ausgelöst wird, und in einem sich an den ersten Zeitraum (ZR₁) anschließenden zweiten Zeitraum (ZR₂) der aktiven Phase (AP) die Ausgangsleistung (AL) im Bereich zwischen der oberen Leistungsschwelle (OLS) und einer unteren Leistungsschwelle (ULS) eingestellt wird und dass entweder die Leistung eines ersten Seedlasers (SL₁) oder eines zweiten Seedlasers (SL₂) in einen Verstärker der Laserstrahlquelle eingekoppelt wird und in der passiven Phase (PP) lediglich die Leistung eines der beiden Seedlaser (SL₂) und in der aktiven Phase (AP) ausschließlich die Leistung des anderen Seedlasers (SL₁) in den Verstärker eingekoppelt wird und die Überhöhung der Ausgangsleistung (AL) während des ersten Zeitraumes (ZR₁) durch eine vorhergehende Dunkelphase (DP) erzeugt und eingestellt wird, in welcher weder eine Ausgangsleistung (AL₁, AL₂) des ersten Seedlasers (SL₁) noch des zweiten Seedlasers (SL₂) in den Verstärker eingekoppelt wird und durch die Dauer der Dunkelphase (DP) die Überhöhung der Ausgangsleistung (AL) in der aktiven Phase (AP) eingestellt wird.

2. Verfahren nach Anspruch 1, **dadurch gekennzeichnet, dass** die Dauer des ersten Zeitraumes (ZR₁) weniger als 1 ns beträgt.

3. Verfahren nach zumindest einem der vorhergehenden Ansprüche, **dadurch gekennzeichnet, dass** die Ausgangsleistung (AL) während des zweiten Zeitraumes (ZR₂) konstant eingestellt wird.

4. Verfahren nach zumindest einem der vorhergehenden Ansprüche, **dadurch gekennzeichnet, dass** die Ausgangsleistung (AL) während des zweiten Zeitraumes (ZR₂) 50 % bis 80 % der Ausgangsleistung (AL) während des ersten Zeitraumes (ZR₁) entspricht.

5. Verfahren nach zumindest einem der vorhergehenden Ansprüche, **dadurch gekennzeichnet, dass** die Dauer der aktiven Phase (AP) weniger als 10 ns, insbesondere ca. 1 ns beträgt.

6. Verfahren nach zumindest einem der vorhergehenden Ansprüche, **dadurch gekennzeichnet, dass** die Ausgangsleistung (AL) der Laserstrahlquelle während der passiven Phase (PP) und der aktiven Phase (AP) durch gegenphasiges Ein- und Ausschalten der Seedlaser (SL₁, SL₂), deren Emission in einem gemeinsamen Verstärker verstärkt wird, konstant gehalten wird.

7. Verfahren nach zumindest einem der vorhergehenden Ansprüche, **dadurch gekennzeichnet, dass** die Ansteuerung von Laserdioden der Laserstrahlquelle zur Unterdrückung der Brillouin-Streuung für die Dauer von weniger als 100 ns, insbesondere weniger als 20 ns, unterbrochen wird.

8. Verfahren nach zumindest einem der vorhergehenden Ansprüche, **dadurch gekennzeichnet, dass** die Geschwindigkeit der Relativbewegung des Auftreffpunktes der Laserstrahlung (5) auf dem Träger (1) mehr als 10 m/s beträgt.

9. Verfahren nach zumindest einem der vorhergehenden Ansprüche, **dadurch gekennzeichnet, dass** der Träger (1) teiltransparent für die Wellenlänge der Laserstrahlung (5) ist.

10. Verfahren nach zumindest einem der vorhergehenden Ansprüche, **dadurch gekennzeichnet, dass** der Träger (1) mit einer die Laserwellenlänge absorbierenden Schicht beschichtet ist, die die Strahlungsenergie in Wärme umwandelt.

11. Verfahren nach zumindest einem der vorhergehenden Ansprüche, **dadurch gekennzeichnet, dass** der Träger (1) mit einer flüssigen Drucksubstanz (2) beschichtet ist, die eine Viskosität von weniger als 106 Pa·s aufweist.

12. Verfahren nach zumindest einem der vorhergehenden Ansprüche, **dadurch gekennzeichnet, dass** eine Wechselwirkungszone der Laserstrahlung (5) mit dem Träger (1) streifenförmig ist und dass die Laserstrahlung (5) im Wesentlichen entlang der größeren Ausdehnung der Wechselwirkungszone ausgelenkt wird.

13. Verfahren nach zumindest einem der vorhergehenden Ansprüche, **dadurch gekennzeichnet, dass** in der passiven Phase (PP) die Ausgangsleistung (AL₂) in eine Strahlfalle abgelenkt wird.

## Claims

1. Method for transferring a printing substance (2) provided on a carrier (1), in particular as a coating, to a substrate (3) by means of laser radiation (5) from a laser radiation source having an amplifier with an output power (AL), in which the laser radiation (5) and the carrier (1) are moved relative to each other and the output power (AL) of the laser radiation source is time-modulated, so that the printing substance (2) is transferred only in an active phase (AP) and, in a passive phase (PP), no printing substance (2) is transferred, **characterized in that** at the start of the active phase (AP), during a first time period (ZR₁), the transfer of the printing substance (2) is triggered by means of a brief elevation of the output power (AL) above an upper power threshold (OLS) of the laser radiation of the transfer process, and in a second time period (ZR₂) of the active phase (AP), following the first time period (ZR₁) , the output power (AL) is set in the range between the upper power threshold (OLS) and a lower power threshold (ULS), and **in that** either the power of a first seed laser (SL₁) or of a second seed laser (SL₂) is coupled into an amplifier of the laser radiation source and, in the passive phase (PP), only the power of one of the two seed lasers (SL₂) and, in the active phase (AP), only the power of the other seed laser (SL₁) is coupled into the laser radiation source, and the elevation of the output power (AL) during the first time period (ZR₁) is generated and set by a preceding dark phase (DP), in which neither an output power (AL₁, AL₂) from the first seed laser (SL₁) nor from the second seed laser (SL₂) is coupled into the amplifier, and the elevation of the output power (AL) in the active phase (AP) is set by the duration of the dark phase (DP).

2. Method according to Claim 1, **characterized in that** the duration of the first time period (ZR₁) is less than 1 ns.

3. Method according to at least one of the preceding claims, **characterized in that** the output power (AL) during the second time period (ZR₂) is set to be constant.

4. Method according to at least one of the preceding claims, **characterized in that** the output power (AL) during the second time period (ZR₂) corresponds to 50% to 80% of the output power (AL) during the first time period (ZR₁).

5. Method according to at least one of the preceding claims, **characterized in that** the duration of the active phase (AP) is less than 10 ns, in particular about 1 ns.

6. Method according to at least one of the preceding claims, **characterized in that** the output power (AL) of the laser radiation source during the passive phase (PP) and the active phase (AP) is kept constant by switching the seed lasers (SL₁, SL₂), the emission from which is amplified in a common amplifier, on and off in anti-phase.

7. Method according to at least one of the preceding claims, **characterized in that** the activation of laser diodes of the laser radiation source is interrupted for the period of less than 100 ns, in particular less than 20 ns, in order to suppress Brillouin scattering.

8. Method according to at least one of the preceding claims, **characterized in that** the speed of the relative movement of the point of impingement of the laser radiation (5) on the carrier (1) is more than 10 m/s.

9. Method according to at least one of the preceding claims, **characterized in that** the carrier (1) is partially transparent to the wavelength of the laser radiation (5).

10. Method according to at least one of the preceding claims, **characterized in that** the carrier (1) is coated with a layer that is absorbent to the laser wavelength and converts the radiation energy into heat.

11. Method according to at least one of the preceding claims, **characterized in that** the carrier (1) is coated with a liquid printing substance (2) which has a viscosity of less than 106 Pa·s.

12. Method according to at least one of the preceding claims, **characterized in that** an interaction zone of the laser radiation (5) with the carrier (1) is strip-like, and **in that** the laser radiation (5) is deflected substantially along the greater extent of the interaction zone.

13. Method according to at least one of the preceding claims, **characterized in that** in the passive phase (PP), the output power (AL₂) is deflected into a beam trap.

## Revendications

1. Procédé pour transférer une substance d'impression (2) fournie sur un support (1), en particulier sous forme de revêtement, sur un substrat (3) au moyen d'un faisceau laser (5) d'une source de faisceau laser comportant un amplificateur et ayant une puissance de sortie (AL), dans lequel le rayonnement laser (5) et le support (1) sont déplacés l'un par rapport à l'autre et la puissance de sortie (AL) de la source de faisceau laser est ainsi modulée dans le temps, de manière à ce que la substance d'impression (2) soit transférée exclusivement lors d'une phase active (AP) et qu'aucune substance d'impression (2) ne soit transférée lors d'une phase passive (PP), **caractérisé en ce que**, au début de la phase active (AP), pendant une première période temps (ZR₁) du transfert de la substance d'impression (2), le processus de transfert est déclenché par une augmentation de courte durée de la puissance de sortie (AL) au-dessus d'un seuil de puissance supérieur (OLS) du rayonnement laser et, lors d'une deuxième période de temps (ZR₂) de la phase active (AP) qui suit la première période de temps (ZR₁), la puissance de sortie (AL) est réglée dans la plage comprise entre le seuil de puissance supérieur (OLS) et un seuil de puissance inférieur (ULS), et **en ce que** soit la puissance d'un premier laser d'ensemencement (SL₁) soit celle d'un second laser d'ensemencement (SL₂) est injectée dans un amplificateur de la source laser et, lors de la phase passive (PP), seule la puissance de l'un des deux lasers d'ensemencement (SL₂) est injectée dans l'amplificateur et, lors de la phase active (AP), seule la puissance de l'autre laser d'ensemencement (SL₁) est injectée dans l'amplificateur, et
l'augmentation de la puissance de sortie (AL) est générée et réglée lors de la première période de temps (ZR₁) par une phase non lumineuse précédente (DP) lors de laquelle ni la puissance de sortie (AL₁, AL₂) du premier laser d'ensemencement (SL₁) ni celle du second laser d'ensemencement (SL₂) n'est injectée dans l'amplificateur et l'augmentation de la puissance de sortie (AL) est réglée lors de la phase active (AP) par la durée de la phase non lumineuse (DP).

2. Procédé selon la revendication 1, **caractérisé en ce que** la durée de la première période de temps (ZR₁) est inférieure à 1 ns.

3. Procédé selon au moins l'une des revendications précédentes, **caractérisé en ce que** la puissance de sortie (AL) est réglée à un niveau constant pendant la deuxième période de temps (ZR₂).

4. Procédé selon au moins l'une des revendications précédentes, **caractérisé en ce que** la puissance de sortie (AL) pendant la deuxième période de temps (ZR₂) correspond à 50 % à 80 % de la puissance de sortie (AL) pendant la première période de temps (ZR₁).

5. Procédé selon au moins l'une des revendications précédentes, **caractérisé en ce que** la durée de la phase active (AP) est inférieure à 10 ns, en particulier d'environ 1 ns.

6. Procédé selon au moins l'une des revendications précédentes, **caractérisé en ce que** la puissance de sortie (AL) de la source de faisceau laser est maintenue constante pendant la phase passive (PP) et la phase active (AP) par activation et désactivation des lasers d'ensemencement (SL₁, SL₂) dont l'émission est amplifiée dans un amplificateur commun.

7. Procédé selon au moins l'une des revendications précédentes, **caractérisé en ce que** la commande de diodes laser de la source de faisceau laser est interrompue pendant une durée inférieure à 100 ns, en particulier inférieure à 20 ns, pour supprimer la diffusion de Brillouin.

8. Procédé selon au moins l'une des revendications précédentes, **caractérisé en ce que** la vitesse du mouvement relatif du point d'incidence du faisceau laser (5) sur le support (1) est supérieure à 10 m/s.

9. Procédé selon au moins l'une des revendications précédentes, **caractérisé en ce que** le support (1) est partiellement transparent à la longueur d'onde du rayonnement laser (5).

10. Procédé selon au moins l'une des revendications précédentes, **caractérisé en ce que** le support (1) est revêtu d'une couche qui absorbe la longueur d'onde du laser et convertit l'énergie de rayonnement en chaleur.

11. Procédé selon au moins l'une des revendications précédentes, **caractérisé en ce que** le support (1) est revêtu d'une substance d'impression liquide (2) ayant une viscosité inférieure à 106 Pa·s.

12. Procédé selon au moins l'une des revendications précédentes, **caractérisé en ce qu'**une zone d'interaction du rayonnement laser (5) avec le support (1) présente la forme d'une bande et **en ce que** le rayonnement laser (5) est sensiblement dévié le long de la plus grande étendue de la zone d'interaction.

13. Procédé selon au moins l'une des revendications précédentes, **caractérisé en ce que** la puissance de sortie (AL₂) est déviée dans un piège à faisceaux lors de la phase passive (PP).
